# EUROPEAN PATENT SPECIFICATION

(11) **EP 4 484 003 B1**
(45) Date of publication and mention of the grant of the patent: **08.04.2026**
(21) Application number: 22927653.0
(22) Date of filing: 22.02.2022
(51) Int. Cl.: B01J 21/06, B01J 37/03, B01J 37/04, B01J 35/39, B01J 35/45, B01J 35/53

(54) **PREPARATION METHOD FOR HOLLOW CORE-SHELL STRUCTURE BY PHOTOCATALYTIC PARTICLE SELF-DRIVEN NUCLEATION**
HERSTELLUNGSVERFAHREN FÜR HOHLKERN-SCHALE-STRUKTUR DURCH PHOTOKATALYTISCHE PARTIKELSELBSTGESTEUERTE NUKLEIERUNG
PROCÉDÉ DE PRÉPARATION D'UNE STRUCTURE COEUR-ÉCORCE CREUSE PAR NUCLÉATION AUTO-ENTRAÎNÉE DE PARTICULES PHOTOCATALYTIQUES

(43) Date of publication of application: 01.01.2025
(73) Proprietor: Necosh (Beijing) Technology Co., Ltd., Beijing 100070 (CN); Necosh Technology Co., Ltd., Huzhou, Zhejiang 313000 (CN)
(72) Inventor: WANG, Tao, Huzhou, Zhejiang 313000 (CN); XU, Kai, Huzhou, Zhejiang 313000 (CN); ZHANG, Zhenyu, Huzhou, Zhejiang 313000 (CN)
(74) Representative: JD&P Patent Attorneys Joanna Dargiewicz & Partners
(86) International application number: PCT/CN2022/077328
(87) International publication number: WO 2023/159357

(56) References cited:
- WO-A1-2020/032519
- CN-A- 101 099 929
- CN-A- 109 221 251
- CN-A- 112 915 989
- JP-A- 2012 187 520
- JP-A- 2018 035 031
- JP-A- 2019 116 396
- US-A1- 2019 381 490

## Description

### TECHNICAL FIELD

The present disclosure relates to the field of a high molecular material, in particular to a method for preparing a core-shell hollow structure with self-driving nucleation of a photocatalytic particle.

### BACKGROUND

As a common photocatalytic material for a semiconductor, titanium dioxide is capable of converting optical energy into chemical energy when irradiated with light, so as to decompose an organic material which is poisonous and harmful. In addition, titanium dioxide has such features as high stability, photocorrosion resistance and being non-poisonous, and no secondary pollution is generated during the treatment, so it has attracted more and more attention in such fields as anti-bacteria, deodorization, contamination decomposition, fungicide, algaecide, and air purification. However, the catalytic reaction is essentially a surface contact reaction, i.e., the reaction merely occurs on a surface of the material. Hence, for a catalyst with a limited surface, it is used not only for the catalytic reaction but also for fixing particles, so usually a catalytic effect is significantly adversely affected.

A core-shell structure is a nanoscale ordered assembly structure in which a nanomaterial is wrapped by another nanomaterial through a chemical bond or any other force. It plays a very important role in maintaining a stable function of a catalyst, adjusting physicochemical features of a material, preventing the agglomeration of nanoparticles and controlling the interfacial interaction of the particles, so it may be widely used in photocatalysis, batteries, gas storage and gas separation. However, for a catalytic nanomaterial which is used to cause a chemical reaction to take place depending on its surface, there is an urgent need to provide a scheme for preventing the catalytic activity of a core from being adversely affected when a surface of the core is covered by a shell.

US. Patent Application (Publication No. US 2019/381490 A1) discloses a composite photocatalyst. The composite photocatalyst includes a nanomotor and a plurality of cocatalysts, the nanomotor comprises a shell formed by porous material, at least one inner core formed by a photocatalyst, and a cavity between the shell and the at least one inner core, the plurality of cocatalysts are located in the cavity. The plurality of cocatalysts are selected from the group consisting of metal nanoparticles, metal oxide nanoparticles, metal sulfide nanoparticles, phosphate nanoparticles, up-conversion material nanoparticles, and any combination thereof. A method for making the composite photocatalyst and application thereof are further provided. The plurality of cocatalysts and the nanomotor forms a photocatalytic synergistic reaction system, improving photo-catalytic activity of the composite photocatalyst.

### SUMMARY

An object of the present disclosure is to at least solve one of the above-mentioned problems in the related art. In the embodiments of the present disclosure, on the basis of a surface/interface principle that a substance with a hydrophobic surface is aerophilic, tetraoctadecyl orthotitanate is used to modify a surface of a market-available titanium dioxide nanosphere particle to be hydrophobic, and the titanium dioxide particle is placed into a system of water and micro-nano bubbles, and then the titanium dioxide particle moves into the micro-nano bubble in a self-driven manner due to a difference in surface tensions. Finally, a silicon dioxide shell is generated at a water-air interface of the micro-nano bubble, so as to obtain a nanoparticles with a photocatalytic core-shell hollow structure between a core and the shell.

To be specific, the present disclosure provides the following technical solutions.

In one aspect, the present disclosure provides in some embodiments a method for preparing a nanoparticle with a core-shell hollow structure, including: mixing an alcoholic solution of titanium dioxide with tetraoctadecyl orthotitanate to obtain a first solution including modified titanium dioxide nanospheres; injecting air into water through a micro-nano bubble generator to obtain a resultant solution, and shearing and smashing the resultant resolution to obtain a second solution including micro-nano bubbles; mixing the second solution with the first solution at a temperature of 35°C or more, so as to obtain a third solution; adding ammonium hydroxide into the third solution, and dripping a solution of tetraethyl orthosilicate, so as to obtain a fourth solution; and separating a precipitate from the fourth solution, and drying and calcining the precipitate, so as to obtain the nanoparticle with the core-shell hollow structure.

In the embodiments of the present disclosure, the method further includes the following technical features.

In a possible embodiment of the present disclosure, the alcoholic solution of titanium dioxide includes 1 to 4 parts by weight of titanium dioxide, and the amount of tetraoctadecyl orthotitanate is 0.1 to 1.5 parts by weight.

In a possible embodiment of the present disclosure, a titanium dioxide particle in the alcoholic solution of titanium dioxide has a diameter of 200 nm to 400 nm.

In a possible embodiment of the present disclosure, the alcoholic solution of titanium dioxide is an ethanol solution of titanium dioxide including 1 to 4 parts by weight of titanium dioxide and 10 to 50 parts by weight of anhydrous ethanol.

In a possible embodiment of the present disclosure, the micro-nano bubble has a diameter of 600 nm to 1000 nm.

In a possible embodiment of the present disclosure, the resultant solution is sheared and smashed for 4 to 9 hours.

In a possible embodiment of the present disclosure, air is injected into water through the micro-nano bubble generator so that air humidity is 5% to 30%.

In a possible embodiment of the present disclosure, the second solution is mixed with the first solution at a temperature of 40°C.

In a possible embodiment of the present disclosure, when the amount of titanium dioxide is 1 to 4 parts by weight, the amount of ammonium hydroxide is 1 to 10 parts by weight, and the amount of the solution of tetraethyl orthosilicate is 2 to 10 parts by weight.

In a possible embodiment of the present disclosure, the precipitate is calcined at a temperature of 400°C to 500°C for 1 to 3 hours.

In a possible embodiment of the present disclosure, the precipitate is dried at a temperature of 70°C to 90°C.

In another aspect, the present disclosure provides in some embodiments a method for preparing a nanoparticle with a core-shell hollow structure, including: mixing an alcoholic solution of titanium dioxide with tetraoctadecyl orthotitanate to obtain a first solution including modified titanium dioxide nanospheres, the alcoholic solution of titanium dioxide including 10 to 50 parts by weight of anhydrous ethanol and 1 to 4 parts by weight of titanium dioxide; injecting air into water through a micro-nano bubble generator to obtain a resultant solution, and shearing and smashing the resultant resolution to obtain a second solution including micro-nano bubbles, the micro-nano bubble having a diameter of 600 nm to 1000 nm; mixing the second solution with the first solution at a temperature of 40°C, so as to obtain a third solution; adding 1 to 10 parts by weight of ammonium hydroxide into the third solution, and dripping 2 to 10 parts by weight of a solution of tetraethyl orthosilicate, so as to obtain a fourth solution; and separating a precipitate from the fourth solution, and drying and calcining the precipitate, so as to obtain the nanoparticle with the core-shell hollow structure.

In yet another aspect, the present disclosure provides in some embodiments a nanoparticle with a core-shell hollow structure prepared through the above-mentioned method.

The present disclosure has the following beneficial effects. According to the method in the embodiments of the present disclosure, the nanoparticle with the photocatalytic core-shell hollow structure is obtained, so it is able to improve the catalytic activity through increasing a surface for the catalytic reaction, and meanwhile save raw materials. In addition, the preparation of the nanoparticle is relatively simple and easily controlled for large-scale production.

### BRIEF DESCRIPTION OF THE DRAWINGS

Fig. 1 is an electron micrograph of a nanoparticle with a core-shell hollow structure according to one embodiment of the present disclosure;
Fig. 2 is an Energy Disperse Spectroscopy (EDS) graph of the nanoparticle with the core-shell hollow structure according to one embodiment of the present disclosure;
Fig. 3 shows an X-Ray Diffraction (XRD) data result of the nanoparticle with the core-shell hollow structure according to one embodiment of the present disclosure;
Fig. 4 shows a result of a photocatalytic discolourization experiment on a rhodamine B solution according to one embodiment of the present disclosure;
Fig. 5 shows a result of an antibacterial test against Escherichia coli and staphylococcus aureus according to one embodiment of the present disclosure;
Fig. 6 is an electron micrograph of a result of Comparative Example 1 according to one embodiment of the present disclosure;
Fig. 7 is an electron micrograph of a result of Comparative Example 2 according to one embodiment of the present disclosure; and
Fig. 8 is an electron micrograph of a result of Comparative Example 3 according to one embodiment of the present disclosure.

### DETAILED DESCRIPTION

The present disclosure will be described hereinafter with reference to the drawings. It should be appreciated that, the following embodiments are for illustrative purposes only, but shall not be used to limit the scope of the present disclosure.

A micro-nano bubble is a special gaseous state on an interface between a gas and a liquid, and it may exist stably for a long time period in the liquid, so it is used as a non-contact preparation template for a catalyst. The micro-nano bubble is obtained through a market-available micro-nano bubble generator. For example, the market-available micro-nano bubble generator is a high-shear generator. Usually, a dynamic or static high-speed shearing device is used to smash a gas-liquid mixture to obtain the micro-nano bubble.

In the embodiments of the present disclosure, on the basis of a surface/interface principle that a substance with a hydrophobic surface is aerophilic, a titanium dioxide particle whose surface is modified to be hydrophobic is placed into a system of water and micro-nano bubbles, and then the titanium dioxide particle moves into the micro-nano bubble in a self-driven manner due to a difference in surface tensions. Finally, a silicon dioxide shell is generated at a water-air interface of the micro-nano bubble, so as to obtain a nanoparticle with a photocatalytic core-shell hollow structure between a core and the shell.

The present disclosure provides in some embodiments a method for preparing a nanoparticle with a core-shell hollow structure, which includes: (1) mixing an alcoholic solution of titanium dioxide with tetraoctadecyl orthotitanate to obtain a first solution including modified titanium dioxide nanospheres; (2) injecting air into water through a micro-nano bubble generator to obtain a resultant solution, and shearing and smashing the resultant resolution to obtain a second solution including micro-nano bubbles; (3) mixing the second solution with the first solution at a temperature of 35°C or more, so as to obtain a third solution; (4) adding ammonium hydroxide into the third solution, and dripping a solution of tetraethyl orthosilicate, so as to obtain a fourth solution; and (5) separating a precipitate from the fourth solution, and drying and calcining the precipitate, so as to obtain the nanoparticle with the core-shell hollow structure.

An order of Steps (1) and (2) will not be particularly defined herein.

In a possible embodiment of the present disclosure, in Step (1), the alcoholic solution of titanium dioxide includes 1 to 4 parts by weight of titanium dioxide, and the amount of tetraoctadecyl orthotitanate is 0.1 to 1.5 parts by weight. Tetraoctadecyl orthotitanate at an appropriate content is used to modify a surface to be hydrophobic, so as to obtain the modified titanium dioxide nanospheres.

In a possible embodiment of the present disclosure, in Step (1), a titanium dioxide particle in the alcoholic solution of titanium dioxide has a diameter of 200 nm to 400 nm.

In a possible embodiment of the present disclosure, in Step (1), the alcoholic solution of titanium dioxide is an ethanol solution of titanium dioxide including 1 to 4 parts by weight of titanium dioxide and 10 to 50 parts by weight of anhydrous ethanol.

In a possible embodiment of the present disclosure, in Step (2), the micro-nano bubble has a diameter of 600 nm to 1000 nm, e.g., 700 nm to 1000 nm, 800 nm to 1000 nm, 900 nm to 1000 nm, or 600 nm to 800 nm. The diameter of the micro-nano bubble may directly affect, to some extent, the performance of the final nanoparticle with the core-shell hollow structure and a size of the space between the core and the shell. When the diameter of the micro-nano bubble is too small, the accommodation of the nanoparticle with the core-shell hollow structure may be adversely affected. When the diameter of the micro-nano bubble is too large, a shell structure of the nanoparticle may be instable.

In a possible embodiment of the present disclosure, the resultant solution is sheared and smashed for 4 to 9 hours.

In a possible embodiment of the present disclosure, in Step (2), air is injected into water through the micro-nano bubble generator so that air humidity is 5% to 30%.

In a possible embodiment of the present disclosure, in Step (3), the second solution is mixed with the first solution at a temperature of 40°C. Along with the volatilization of alcohol, the titanium dioxide nanosphere whose surface is modified into hydrophobic may be provided with a hydrophobic and aerophilic characteristic due to the existence of a surface tension, and then moves into the bubble in a self-driven manner (similar to the removal of impurities through bubbles in water).

Tetraethyl orthosilicate forms silicon dioxide under the effect of ammonium hydroxide. In a possible embodiment of the present disclosure, in Step (4), when the amount of titanium dioxide is 1 to 4 parts by weight, the amount of ammonium hydroxide is 1 to 10 parts by weight, and the amount of the solution of tetraethyl orthosilicate is 2 to 10 parts by weight.

In a possible embodiment of the present disclosure, in Step (5), the precipitate is calcined at a temperature of 400°C to 500°C for 1 to 3 hours.

In a possible embodiment of the present disclosure, the precipitate is dried at a temperature of 70°C to 90°C.

The present disclosure will be described hereinafter in conjunction with the embodiments. The following embodiments are for illustrative purposes only, but shall not be used to limit the scope of the present disclosure. Where no technique or condition is specified, the known technique or condition, or that specified in a product manual, may be applied. Where no manufacturer of a reagent or instrument is specified, the market-available reagent or instrument may be applied.

### Example 1

In this Example, the present disclosure provides a method for preparing a nanoparticle with a core-shell hollow structure, which includes: (1) adding 2 parts by weight of market-available titanium dioxide nanospheres each with a diameter of 200 nm to 400 nm into 30 parts by weight of anhydrous ethanol, and stirring a resultant solution evenly; (2) adding 1 part by weight of tetraoctadecyl orthotitanate into the solution obtained in (1), and stirring a resultant solution for 24 hours, so as to modify a surface of the titanium dioxide nanosphere to be hydrophobic; (3) injecting air into 100 parts by weight of distilled water through a market-available micro-nano bubble generator, and shearing and smashing a resultant solution for 6 hours to obtain micro-nano bubbles each with a diameter of about 800 nm; (4) heating the solution obtained in (3) to 40°C, and rapidly adding 10 parts by weight of the solution obtained in (2) into the solution; (5) adding 5 parts by weight of ammonium hydroxide into the solution obtained in (4), intensely stirring a resultant solution, dripping 5 parts by weight of a solution of tetraethyl orthosilicate, and stirring a resultant solution for 4 hours; and (6) subjecting the solution obtained in (5) to centrifugal treatment to obtain a precipitate, drying the precipitate at a temperature of 80°C for 12 hours, and calcining the precipitate at a temperature of 400°C to 500°C for 1 to 3 hours, so as to obtain the nanoparticle with the core-shell hollow structure.

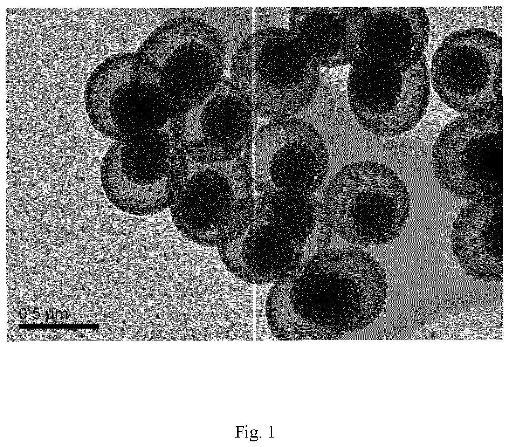

Fig. 1 is an electron micrograph of the obtained nanoparticle with the core-shell hollow structure.

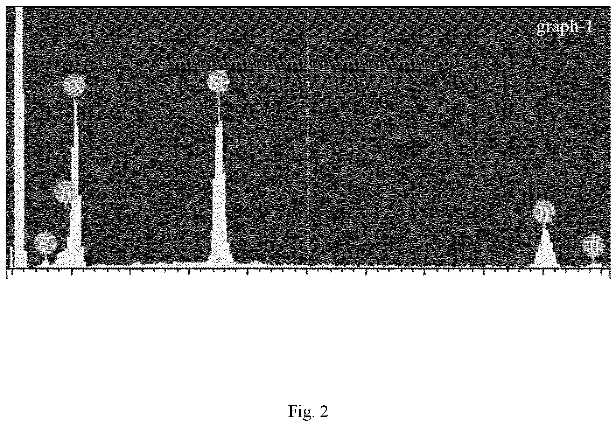

Fig. 2 is an EDS graph of the nanoparticle with the core-shell hollow structure. Fig. 2 shows a ratio of elements in the nanoparticle with the core-shell hollow structure as a photocatalyst.

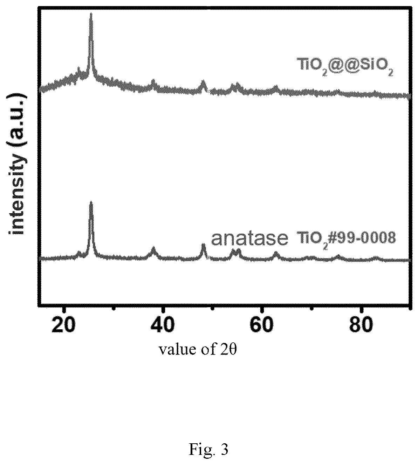

In addition, XRD data shows that, there is no change in a lattice structure of the titanium dioxide particle in the nanoparticle with the core-shell hollow structure, with parameters of a standard titanium dioxide (anatase) lattice structure, as shown in Fig. 3.

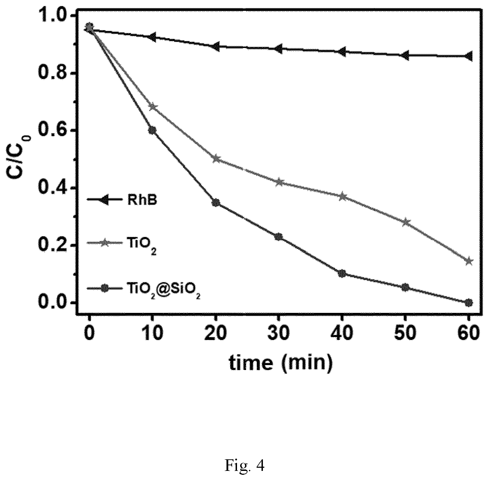

Fig. 4 shows a result of a photocatalytic discolourization experiment on a rhodamine B solution. As show in Fig. 4, a 1*10⁻⁵ mol/L rhodamine B (RhB) solution is photocatalytically discolourized within 1 hour through the nanoparticle with the core-shell hollow structure, and the catalytic activity of the nanoparticle with the core-shell hollow structure is higher than that of the untreated titanium dioxide particle under equal conditions.

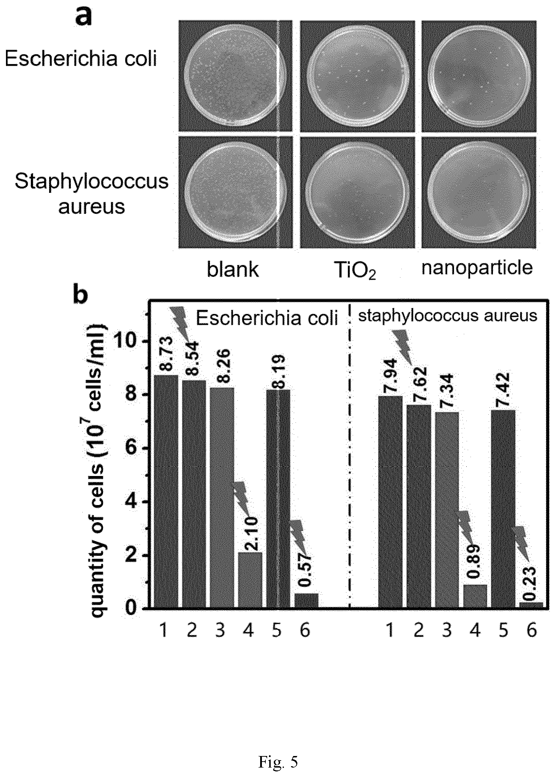

Fig. 5 shows a result of an antibacterial test against Escherichia coli and staphylococcus aureus. As shown in Fig. 5, as compared with blank samples (#1 and #2 in Fig. 5(b)) and samples added with titanium dioxide (#3 and #4 in Fig. 5(b)), samples added with the nanoparticle with the core-shell hollow structure (#5 and #6 in Fig. 5(b)) exhibit a highest antibacterial property.

### Example 2

In this Example, the present disclosure provides a method for preparing a nanoparticle with a core-shell hollow structure, which includes: (1) adding 4 parts by weight of market-available titanium dioxide nanospheres each with a diameter of 200 nm to 400 nm into 50 parts by weight of anhydrous ethanol, and stirring a resultant solution evenly; (2) adding 1.5 parts by weight of tetraoctadecyl orthotitanate into the solution obtained in (1), and stirring a resultant solution for 40 hours, so as to modify a surface of the titanium dioxide nanosphere to be hydrophobic; (3) injecting air into 100 parts by weight of distilled water through a market-available micro-nano bubble generator, and shearing and smashing a resultant solution for 8 hours to obtain micro-nano bubbles each with a diameter of about 1000 nm; (4) heating the solution obtained in (3) to 40°C, and rapidly adding 20 parts by weight of the solution obtained in (2) into the solution; (5) adding 10 parts by weight of ammonium hydroxide into the solution obtained in (4), intensely stirring a resultant solution, dripping 10 parts by weight of a solution of tetraethyl orthosilicate, and stirring a resultant solution for 4 hours; and (6) subjecting the solution obtained in (5) to centrifugal treatment to obtain a precipitate, drying the precipitate at a temperature of 80°C for 12 hours, and calcining the precipitate at a temperature of 400°C to 500°C for 1 to 3 hours, so as to obtain the nanoparticle with the core-shell hollow structure.

The nanoparticle with the core-shell hollow structure prepared in Example 2 exhibits similar characteristics to that in Example 1.

### Comparative Example 1

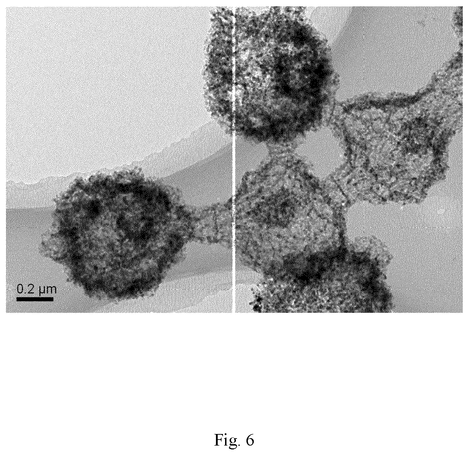

It is found during the experiments that, when the surface of the titanium dioxide nanosphere is modified to be hydrophobic, the hydrophobicity is insufficient in the absence of tetraoctadecyl orthotitanate. At this time, it is impossible to provide the titanium dioxide nanosphere with a hydrophobic and aerophilic characteristic under the effect of the surface tension and move the titanium dioxide nanosphere into the bubble in a self-driven manner, thereby there is no core inside the final silicon dioxide shell, as shown in Fig. 6. Identically, when the amount of tetraoctadecyl orthotitanate is insufficient, the structure and performance of the nanoparticle with the core-shell hollow structure may also be adversely affected.

### Comparative Example 2

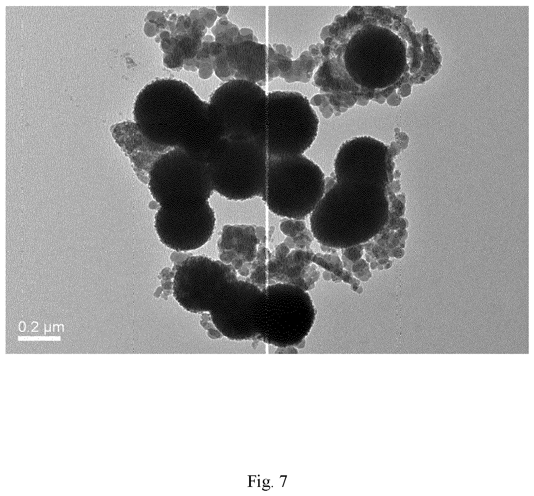

It is found through researches that, in the process of generating the silicon dioxide shell at the water-air interface through the reaction of tetraethyl orthosilicate with ammonium hydroxide, it is impossible to form the shell structure due to the too rapid formation of silicon dioxide, as shown in Fig. 7. Hence, the solution of tetraethyl orthosilicate should be added in a dropwise manner.

### Comparative Example 3

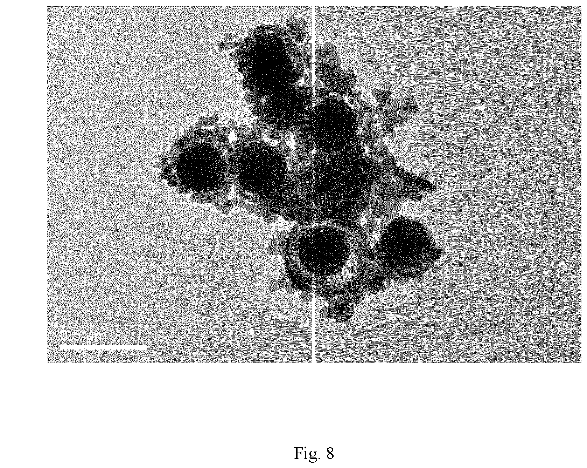

It is found through researches that, in the process of generating the silicon dioxide shell at the water-air interface through the reaction of tetraethyl orthosilicate with ammonium hydroxide, the self-agglomeration of silicon dioxide occurs due to excessive silicon dioxide when too much tetraethyl orthosilicate is added, and thereby the normal formation of the shell structure may be adversely affected, as shown in Fig. 8.

## Claims

1. A method for preparing a nanoparticle with a core-shell hollow structure, comprising:
mixing an alcoholic solution of titanium dioxide with tetraoctadecyl orthotitanate to obtain a first solution comprising modified titanium dioxide nanospheres;
injecting air into water through a micro-nano bubble generator to obtain a resultant solution, and shearing and smashing the resultant resolution to obtain a second solution comprising micro-nano bubbles;
mixing the second solution with the first solution at a temperature of 35°C or more, so as to obtain a third solution;
adding ammonium hydroxide into the third solution, and dripping a solution of tetraethyl orthosilicate, so as to obtain a fourth solution; and
separating a precipitate from the fourth solution, and drying and calcining the precipitate, so as to obtain the nanoparticle with the core-shell hollow structure.

2. The method according to claim 1, wherein the alcoholic solution of titanium dioxide comprises 1 to 4 parts by weight of titanium dioxide, an amount of tetraoctadecyl orthotitanate is 0.1 to 1.5 parts by weight, and a titanium dioxide particle in the alcoholic solution of titanium dioxide has a diameter of 200 nm to 400 nm.

3. The method according to claim 1, wherein the alcoholic solution of titanium dioxide is an ethanol solution of titanium dioxide comprising 1 to 4 parts by weight of titanium dioxide and 10 to 50 parts by weight of anhydrous ethanol.

4. The method according to claim 1, wherein the micro-nano bubble has a diameter of 600 nm to 1000 nm, and the resultant solution is sheared and smashed for 4 to 9 hours.

5. The method according to claim 1, wherein air is injected into water through the micro-nano bubble generator so that air humidity is 5% to 30%.

6. The method according to claim 1, wherein the second solution is mixed with the first solution at a temperature of 40°C to 50°C.

7. The method according to claim 1, wherein when the amount of titanium dioxide is 1 to 4 parts by weight, an amount of ammonium hydroxide is 1 to 10 parts by weight, and an amount of the solution of tetraethyl orthosilicate is 2 to 10 parts by weight.

8. The method according to claim 1, wherein the precipitate is calcined at a temperature of 400°C to 500°C for 1 to 3 hours, and the precipitate is dried at a temperature of 70°C to 90°C.

## Patentansprüche

1. Verfahren zur Herstellung eines Nanopartikels mit einer Kern-Schale-Hohlstruktur, umfassend:
Mischen einer alkoholischen Lösung von Titandioxid mit Tetraoctadecylorthotitanat, um eine erste Lösung zu erhalten, die modifizierte Titandioxid-Nanosphären enthält;
Einblasen von Luft in Wasser durch einen Mikro-Nanoblasen-Generator, um eine resultierende Lösung zu erhalten, und Scheren und Zerkleinern der resultierenden Lösung, um eine zweite Lösung zu erhalten, die Mikro-Nanoblasen enthält;
Mischen der zweiten Lösung mit der ersten Lösung bei einer Temperatur von 35 °C oder mehr, um eine dritte Lösung zu erhalten;
Zugabe von Ammoniumhydroxid zur dritten Lösung und tropfenweise Zugabe von 2 bis 10 Gewichtsteilen einer Lösung von Tetraethylorthosilicat, um eine vierte Lösung zu erhalten; und
Abscheiden eines Niederschlags aus der vierten Lösung sowie Trocknen und Calcinieren des Niederschlags, um das Nanopartikel mit der Kern-Schale-Hohlstruktur zu erhalten.

2. Verfahren nach Anspruch 1, wobei die alkoholische Lösung von Titandioxid 1 bis 4 Gewichtsteile Titandioxid umfasst, eine Menge Tetraoctadecylorthotitanat 0,1 bis 1,5 Gewichtsteile beträgt und ein Titandioxidpartikel in der alkoholischen Lösung von Titandioxid einen Durchmesser von 200 nm bis 400 nm aufweist.

3. Verfahren nach Anspruch 1, wobei die alkoholische Lösung von Titandioxid eine Ethanollösung von Titandioxid ist, die 1 bis 4 Gewichtsteile Titandioxid und 10 bis 50 Gewichtsteile wasserfreies Ethanol enthält.

4. Verfahren nach Anspruch 1, wobei die Mikro-Nanoblase einen Durchmesser von 600 nm bis 1000 nm aufweist und die resultierende Lösung für 4 bis 9 Stunden geschert und zerkleinert wird.

5. Verfahren nach Anspruch 1, wobei Luft durch den Mikro-Nanoblasen-Generator in Wasser eingeleitet wird, so dass die Luftfeuchtigkeit 5 % bis 30 % beträgt.

6. Verfahren nach Anspruch 1, wobei die zweite Lösung mit der ersten Lösung bei einer Temperatur von 40 °C bis 50 °C gemischt wird.

7. Verfahren nach Anspruch 1, wobei, wenn die Menge an Titandioxid 1 bis 4 Gewichtsteile beträgt, eine Menge an Ammoniumhydroxid 1 bis 10 Gewichtsteile beträgt.

8. Verfahren nach Anspruch 1, wobei der Niederschlag bei einer Temperatur von 400 °C bis 500 °C für 1 bis 3 Stunden kalziniert wird und der Niederschlag bei einer Temperatur von 70 °C bis 90 °C getrocknet wird.

## Revendications

1. Procédé de préparation de nanoparticules à structure creuses cœur-coquille, **caractérisé en ce qu'**il comprend:
le mélange d'une solution alcoolique de dioxyde de titane et de tétra(octadécyl) orthotitanate pour obtenir une première solution, ladite première solution comprenant des nanosphères de dioxyde de titane modifiées;
l'introduction d'air dans de l'eau à l'aide d'un générateur de micro-nanobulles, suivie d'une agitation par cisaillement pour obtenir une deuxième solution, ladite deuxième solution contenant des micro-nanobulles;
le mélange de la deuxième solution et de la première solution à une température égale ou supérieure à 35°C pour obtenir une troisième solution;
l'ajout d'ammoniaque dans ladite troisième solution, puis l'addition goutte à goutte de 2 à 10 parties en poids d'une solution d'orthosilicate d'éthyle pour obtenir une quatrième solution;
la séparation d'un précipité de la quatrième solution, puis séchage et calcination du précipité pour obtenir la nanoparticules à structure creuses cœur-coquille.

2. Procédé selon la revendication 1, **caractérisé en ce que** ladite solution alcoolique de dioxyde de titane contient 1 à 4 parties en poids de dioxyde de titane, la quantité de tétra(octadécyl) orthotitanate est de 0,1 à 1,5 parties en poids; et le diamètre du dioxyde de titane dans la solution alcoolique de dioxyde de titane est de 200 à 400 nanomètres.

3. Procédé selon la revendication 1, **caractérisé en ce que** ladite solution alcoolique de dioxyde de titane est une solution de dioxyde de titane dans l'éthanol, contenant 1 à 4 parties en poids de dioxyde de titane et 10 à 50 parties en poids d'éthanol anhydre.

4. Procédé selon la revendication 1, **caractérisé en ce que** lesdites micro-nanobulles ont un diamètre de 600 à 1000 nanomètres; et ladite agitation par cisaillement est effectuée pendant une durée de 4 à 9 heures.

5. Procédé selon la revendication 1, **caractérisé en ce que** l'introduction d'air dans l'eau à l'aide du générateur de micro-nanobulles est réalisée de manière à obtenir une humidité de l'air de 5 % à 30 %.

6. Procédé selon la revendication 1, **caractérisé en ce que** le mélange de la deuxième solution et de la première solution est effectué à une température comprise entre 40 et 50 °C.

7. Procédé selon la revendication 1, **caractérisé en ce que**, sur la base d'une quantité de dioxyde de titane de 1 à 4 parties en poids, la quantité d'ammoniaque est de 1 à 10 parties en poids.

8. Procédé selon la revendication 1, **caractérisé en ce que** ladite calcination est effectuée à une température de 400 à 500°C pendant une durée de 1 à 3 heures; et ledit séchage est effectué à une température de 70 à 90°C.
